# DEMANDE DE BREVET EUROPEEN

(11) **EP 3 462 702 A1**
(43) Date de publication de la demande: **03.04.2019**
(21) Numéro de dépôt: 18196684.7
(22) Date de dépôt: 25.09.2018
(51) Int. Cl.: H04L 29/06

(54) **PROCÉDÉ D'AFFECTATION D'UNE COMMUNICATION**

(30) Priorité: 29.09.2017 FR 1759142
(71) Demandeur: Orange, 75015 Paris (FR)
(72) Inventeur: CASEAU, François, 92326 Chatillon (FR); FAUR, Florence, 92326 Chatillon (FR)

(57) **Abrégé**

L'invention est un procédé de traitement de données de communications à travers un réseau de communication, comprenant :
- recevoir des premières données relatives à une première communication entre un premier et un second dispositifs électroniques respectivement associés à un premier et un second identifiants de connexion, les premières données comprenant un identifiant de connexion générique associé au premier identifiant de connexion et utilisé pour la première communication,
- mémoriser au moins le premier identifiant de connexion associé à l'identifiant de connexion générique et le second identifiant de connexion utilisé pour la première communication,
- recevoir des secondes données relatives à une deuxième communication,
- rechercher parmi les secondes données, le premier ou le second identifiant de connexion mémorisé, et
- selon le résultat de la recherche, associer la deuxième communication aux premier et second identifiants de connexion.

## Description

La présente invention concerne l'établissement d'une communication depuis un premier dispositif de communication à destination d'un deuxième dispositif de communication, les premier et deuxième dispositifs de communication ayant en particulier chacun un identifiant d'appel principal. Elle concerne plus particulièrement les services de communication garantissant l'anonymat d'un utilisateur.

Les services de communication garantissant l'anonymat d'un utilisateur, en particulier l'utilisateur appelant, proposent actuellement d'allouer un identifiant d'appel secondaire au terminal de l'utilisateur appelant disposant déjà d'un identifiant d'appel principal. Par exemple, dans le cas où l'utilisateur appelant dispose d'un terminal de communication mobile, l'identifiant d'appel principal est un identifiant MSISDN (en anglais « Mobile Station International Subscriber Directory Number ») correspondant de manière unique à la carte SIM (en anglais « Subscriber Identity Module ») qui est fournie par l'opérateur du réseau mobile auprès duquel s'est inscrit l'utilisateur. En règle générale, cet identifiant est le numéro de téléphone du terminal mobile dans ledit réseau mobile.

Ces services de communication sont par exemple proposés aux sociétés ou entreprises souhaitant bénéficier de services d'alias. Ainsi, lorsqu'un salarié d'une société appelle ses clients via un service d'alias, c'est un identifiant d'appel secondaire, appelé aussi numéro alias, qui est présenté à ses clients, et non pas son identifiant d'appel principal ou numéro « réel ». Par ailleurs, un numéro alias peut-être partagé par plusieurs salariés de la société, et une société peut disposer de plusieurs numéros alias.

Lorsqu'un client appelle un numéro alias d'une société, le numéro de téléphone réel du salarié avec lequel le client sera mis en relation n'est pas divulgué. Alternativement, lorsqu'un salarié appelle un client, l'appel transite via une plateforme de services d'alias, appelée également plateforme d'anonymisation, qui va modifier les paramètres d'appels pour présenter un numéro alias au client.

Toutefois, lorsque le client veut rappeler son précédent interlocuteur, il ne possède qu'un numéro alias de la société. Bien qu'un des avantages du procédé d'anonymisation permette aux sociétés de gérer un système d'affectation de ses appels entrants, appelée aussi « routage », et/ou de ne pas être la cible de rappels parasites, il est des cas d'utilisation où la société peut faire le choix de conserver un lien entre deux interlocuteurs : un client et un de ses salariés.

L'invention offre une solution ne présentant pas les inconvénients de l'état de la technique.

A cet effet, selon un premier aspect fonctionnel, il est proposé un procédé de traitement de données de communications à travers un réseau de communication,
comprenant :
- recevoir des premières données relatives à une première communication entre un premier et un second dispositifs électroniques respectivement associés à un premier et un second identifiants de connexion, les premières données comprenant un identifiant de connexion générique associé au premier identifiant de connexion et utilisé pour la première communication,
- mémoriser au moins le premier identifiant de connexion associé à l'identifiant de connexion générique, et le second identifiant de connexion utilisé pour la première communication,
- recevoir des secondes données relatives à une deuxième communication,
- rechercher parmi les secondes données, le premier ou le second identifiant de connexion mémorisé, et
- selon le résultat de la recherche, associer la deuxième communication aux premier et deuxième identifiants de connexion.

Le procédé de traitement de données de communications ici décrit permet à une société possédant un système de communication intégrant un service d'alias, d'améliorer la satisfaction de ses clients en identifiant les précédents interlocuteurs internes de ces derniers afin de rediriger une communication entrante directement vers un des précédents interlocuteurs d'un client, tout en préservant un avantage majeur du service d'alias : les numéros réels des dispositifs de communication internes à la société, ne sont pas communiqués.

Ainsi, le procédé de traitement de données de communications ici décrit offre l'avantage d'intégrer à un système de communication d'une société (société qui peut par exemple être un centre d'appels) de nouveaux services en se basant sur un historique des appels ou des communications (SMS/messages) afin d'affecter, si besoin, un appel entrant/une communication entrante d'un client vers un salarié précédemment associé à ce client.

De manière générale, cette association entre un salarié et un client peut être établie automatiquement, par exemple après un appel, ou manuellement, par exemple par une entrée dans un répertoire de contacts associé à ce salarié. Un gestionnaire du système de téléphonie de la société peut également associer des numéros de téléphone de clients de la société, à des identifiants MSISDN de salariés.

Selon un mode de réalisation, le premier identifiant de connexion est également envoyé selon le résultat de la recherche.

Avantageusement, ce mode de réalisation permet d'affecter une communication entrante vers un salarié donné, en transmettant par exemple au système de communication de la société, les informations nécessaires à cette affectation ; en particulier le numéro « réel » du salarié. Par « affecter » une communication est entendu une transmission d'information permettant la direction/redirection d'une communication, ou bien la direction/redirection d'une communication en tant que telle à travers un système informatisé.

Selon un autre mode de réalisation, qui pourra être mis en oeuvre alternativement ou cumulativement avec le précédent, la première communication est effectuée vers l'identifiant de connexion générique.

Avantageusement, ce mode de réalisation permet à un client d'être mis en relation directement avec le salarié avec lequel il avait été précédemment en contact. Un numéro alias peut être soit un numéro déjà existant, soit un numéro créé pour la mise en oeuvre de cette invention.

Selon un mode de réalisation, qui pourra être mis en oeuvre alternativement ou cumulativement avec les précédents, une période de temps entre la première et la deuxième communication est également associée à la deuxième communication selon le résultat de la recherche.

Avantageusement, ce mode de réalisation permet d'affecter une communication entrante, seulement dans le cas où la première communication (par exemple, le début ou la fin de celle-ci) a été effectuée depuis moins de N minutes (N étant paramétrable) avant la seconde communication. Ainsi, la possibilité de rappel par un client est limitée dans le temps, par exemple dans le but de préserver les salariés d'appels parasites.

Selon un mode de réalisation, qui pourra être mis en oeuvre alternativement ou cumulativement avec les précédents, l'identifiant de connexion générique est également mémorisé, recherché, et associé à la deuxième communication selon le résultat de la recherche.

Avantageusement, ce mode de réalisation permet d'associer une communication entre deux interlocuteurs à un identifiant de connexion générique, afin de, par exemple contextualiser un historique des communications entre ces deux interlocuteurs.

Selon un mode de réalisation, qui pourra être mis en oeuvre alternativement ou cumulativement avec les précédents, un type de communication est également mémorisé, recherché, et associé à la deuxième communication selon le résultat de la recherche.

Avantageusement, ce mode de réalisation permet d'associer une communication entre deux interlocuteurs à un type de communication (appel ou SMS), afin de, par exemple suggérer au salarié un type de communication comme type de communication préféré par son interlocuteur.

Selon un autre mode de réalisation, qui pourra être mis en oeuvre alternativement ou cumulativement avec les précédents, les secondes données relatives à la deuxième communication sont mémorisées.

Avantageusement, ce mode de réalisation permet d'alimenter un historique des communications, en particulier que l'établissement de cette deuxième communication soit effectué ou non.

Selon un autre mode de réalisation, qui pourra être mis en oeuvre alternativement ou cumulativement avec les précédents, si une communication est un appel téléphonique établi, des données relatives à l'établissement sont mémorisées.

Avantageusement, ce mode de réalisation permet d'alimenter un historique des appels selon les appels établis. Par établissement d'un appel téléphonique est entendu une mise en relation effective entre l'émetteur et le récepteur. Par exemple, un salarié ayant répondu à un ou plusieurs appels d'un client, les règles d'affectation des communications de la société peuvent limiter le nombre de rappels de ce client vers ce salarié.

Selon un autre mode de réalisation, qui pourra être mis en oeuvre alternativement ou cumulativement avec les précédents, si une communication est un appel téléphonique non-établi, des données relatives au non-établissement sont mémorisées.

Avantageusement, ce mode de réalisation permet d'alimenter un historique des appels selon les appels non établis. Par exemple, le salarié n'ayant pas répondu à l'appel ou à plusieurs appels d'un client, les règles d'affectation des communications de la société peuvent limiter le nombre d'appels non établis afin d'appliquer une redirection des appels suivants vers une messagerie vocale.

Selon un autre mode de réalisation, qui pourra être mis en oeuvre alternativement ou cumulativement avec les précédents, la première communication est effectuée par un émetteur anonymisé.

Avantageusement, ce mode de réalisation permet à un salarié d'une société d'appeler un client à partir d'un numéro alias, et d'être rappelé par le client ultérieurement sans avoir communiqué son numéro réel.

Selon un autre mode de réalisation, qui pourra être mis en oeuvre alternativement ou cumulativement avec les précédents, la deuxième communication est un message.

Avantageusement, ce mode de réalisation permet d'adapter le procédé ici décrit à un autre type de communication que l'appel téléphonique, par exemple une communication de type SMS. Ainsi, un historique des communications regroupe autant les identifiants de connexion issus d'appels téléphoniques que de messages.

L'invention comprend également un programme d'ordinateur apte à être mis en oeuvre sur un serveur de traitement de données de communications comprenant des instructions de code qui, lorsqu'il est exécuté par un processeur, réalise le procédé de traitement de données de communications.

L'invention comprend également un support de données sur lequel a été mémorisée au moins une série d'instructions de code de programme pour l'exécution du procédé de traitement de données de communications.

Selon un aspect matériel, il est proposé un serveur de traitement de données de communications, apte à traiter des données de communications à travers un réseau de communication, un procédé d'anonymisation d'identifiant de connexion de dispositifs électroniques étant mis en oeuvre à travers une plateforme d'anonymisation, le serveur comprenant une base de données et un module applicatif comprenant :
- un module de communication apte à réceptionner et à envoyer des données relatives à des communications entre un premier et un second dispositifs électroniques respectivement associés à un premier et un second identifiants de connexion, un identifiant de connexion générique étant associé au premier identifiant de connexion.
- un module de mémorisation apte à mémoriser dans une base de données, appelée historique des communications, au moins le premier identifiant de connexion associé à l'identifiant de connexion générique d'une communication, et le second identifiant de connexion,
- un module de recherche apte à rechercher dans la base de données, le premier ou le second identifiant de connexion d'une communication mémorisé, et
- un module d'association apte à associer à une communication, le premier et le second identifiants de connexion.

Par intégration du procédé de l'invention, le serveur de traitement de données de communications permet en particulier à une société d'affecter à une communication entrante, un interlocuteur interne désigné selon un historique des communications.

Une mise en oeuvre opérationnelle du serveur de de traitement de données de communications ici décrit est destinée à enrichir la plateforme d'anonymisation d'une société en fournissant de nouvelles fonctionnalités au système de communication de cette société, en particulier pour des services vocaux.

L'invention sera mieux comprise à la lecture de la description qui suit, donnée à titre d'exemple et faite en référence aux dessins annexés sur lesquels :
La figure 1 illustre un premier exemple de mise en oeuvre du procédé ici décrit.
La figure 2 illustre les grandes étapes de mise en oeuvre du procédé lors de l'étape A1.
La figure 3 illustre par un diagramme les échanges effectués lors de l'étape A1 de mise en oeuvre du procédé.
La figure 4 illustre par un diagramme les échanges effectués lors de l'étape B1 de mise en oeuvre du procédé en cas d'établissement d'une communication.
La figure 5 illustre par un diagramme les échanges effectués lors de l'étape B1 de mise en oeuvre du procédé en cas de non-établissement d'une communication.
La figure 6 illustre un deuxième exemple de mise en oeuvre du procédé ici décrit.
La figure 7 illustre par un diagramme les échanges effectués lors de l'étape A2 de mise en oeuvre du procédé.
La figure 8a et figure 8b illustrent un environnement de mise en oeuvre du procédé de traitement de données de communications ici présenté, par exemple dans le cas d'un SMS envoyé par un client.

Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la description.

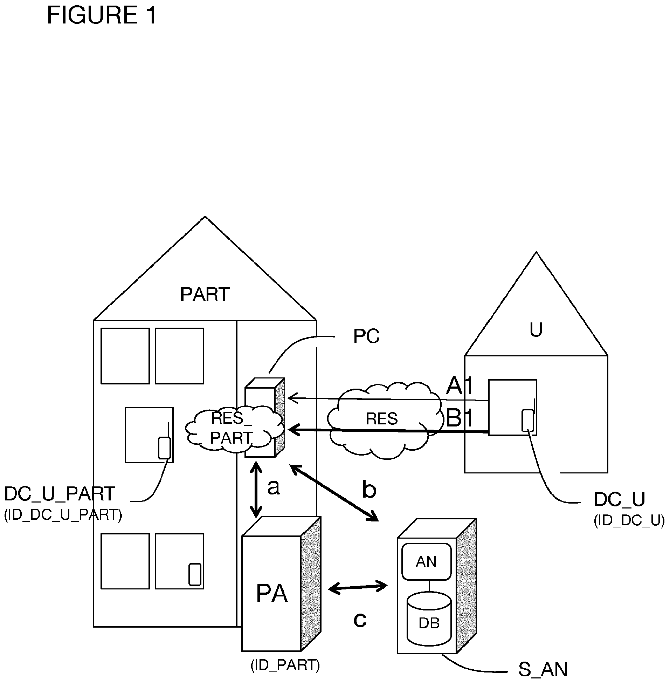

La figure 1 illustre un premier exemple de mise en oeuvre du procédé ici décrit.

Une société PART utilise les services d'une plateforme d'anonymisation (appelée également plateforme de services d'alias) et référencée PA, permettant par exemple à un salarié de cette société d'émettre un appel d'un dispositif téléphonique référencé DC_U_PART, vers un dispositif téléphonique d'un client U, référencé DC_U. Cette plateforme d'anonymisation peut être localisée au sein d'une architecture de communication de la société, ou bien être utilisée en mode SaaS (« Software as a Service » en anglais) par la société.

Dans un mode de réalisation, l'appel initié par le salarié à partir d'un téléphone fixe de la société, est acheminé vers une plateforme de communication, référencée PC, associée à un réseau de communication interne RES_PART de la société. Cette plateforme de communication interagit avec la plateforme d'anonymisation qui anonymise l'identifiant de connexion du dispositif DC_U_PART en le remplaçant par un identifiant de connexion générique ID_PART. Alternativement, si l'appel est initié par le salarié à partir d'un téléphone mobile, l'appel est acheminé directement d'un réseau, par exemple un réseau MSISDN, vers la plateforme d'anonymisation, sans passer par un réseau de communication interne à la société.

L'établissement de l'appel se poursuit ensuite vers le destinataire de l'appel, le client U identifie l'appel à travers l'identifiant de connexion générique ID_PART : si le client prend l'appel, une mise en relation entre le salarié et le client est effectuée. Dans la suite, les identifiants de connexion associés aux dispositifs de communication DC_U_PART et DC_U sont référencés respectivement ID_DC_U_PART et ID_DC_U.

Le procédé présenté ici est par exemple mis en oeuvre dans un serveur S_AN comprenant un module applicatif référencé AN et une base de données référencée DB, appelée historique des communications (entrantes et/ou sortantes). Ce serveur S_AN interagit avec la plateforme d'anonymisation PA. Alternativement, le module applicatif AN est mis en oeuvre directement au sein de la plateforme d'anonymisation PA. Ce serveur S_AN peut être localisé au sein d'une architecture de communication de la société, ou bien être utilisé en mode SaaS (« Software as a Service » en anglais) par la société cliente de l'invention. Alternativement, un appel entrant ou sortant peut être acheminé directement d'un réseau, par exemple un réseau MSISDN, vers le serveur S_AN.

Dans un mode de réalisation illustré par la figure 1, un client U contacte la société PART en composant un identifiant de connexion générique de cette société, un numéro à 4 digits par exemple, dans le but de signaler un dysfonctionnement d'un produit ou service. Dans certains cas, ce numéro peut avoir été associé à des identifiants de connexion réels de la société. A réception de l'appel via le réseau de communication externe RES, la plateforme de communication PC dirige l'appel selon les règles d'affectation des communications définies par la société, par exemple vers un salarié en particulier. Dans un mode de réalisation particulier, la plateforme de communication PC effectue auparavant une requête auprès de la plateforme d'alias PA (a).

Les paramètres de l'appel sont sauvegardés dans un historique des communications référencé DB, intégré par exemple dans le serveur S_AN ; en particulier, l'identifiant de connexion ID_DC_U de l'émetteur, l'identifiant de connexion ID_DC_U_PART du destinataire, et l'heure de l'appel. Alternativement, le numéro alias utilisé est également mémorisé (c). Dans un mode de réalisation particulier, une étape de mémorisation d'informations est ultérieurement effectuée une fois la communication établie ou non établie, afin de sauvegarder cette information d'établissement ou de non-établissement (b).

Dans une première étape notée A1, le client U est donc dirigé vers un salarié, le procédé mis en oeuvre dans le serveur S_AN mémorise des caractéristiques de ce premier appel. Dans une deuxième étape B1, le client U rappelle quelques minutes plus tard, par exemple pour demander une précision supplémentaire : la plateforme de communication PC récupère les informations d'affectation de la communication auprès du serveur S_AN, et le client est dirigé à nouveau vers le même salarié. Alternativement, le numéro alias est également mémorisé lors de l'étape A1, puis récupéré lors d'une étape B1.

Plus précisément, lors de la deuxième étape B1, le procédé reçoit des caractéristiques du deuxième appel, recherche dans la base de données DB l'identifiant de connexion du client U, associe cet identifiant de connexion à la première communication, et envoie l'identifiant de connexion du salarié ID_DC_U_PART à la plateforme de communication PC afin de permettre l'établissement d'un appel entre les dispositifs DC_U et DC_U_PART.

Dans un mode de réalisation particulier, la valeur de la période de temps entre la première étape A1 et la deuxième étape B1 permet de poursuivre l'affectation de la communication vers le dispositif DC_U_PART. Par exemple, si plus d'une heure s'est écoulée entre les deux étapes A1 et B1, le procédé peut ne pas envoyer l'identifiant ID_DC_U_PART vers la plateforme de communication PC et/ou la plateforme d'alias PA, ou bien envoyer l'identifiant ID_DC_U_PART avec la valeur de cette période de temps.

Dans un mode de réalisation particulier, le procédé recherche également le numéro alias utilisé afin de filtrer sa recherche ; en effet, dans le cas où la société utilise plusieurs numéros alias, il peut être préférable d'intégrer cette information aux règles d'affectation des communications.

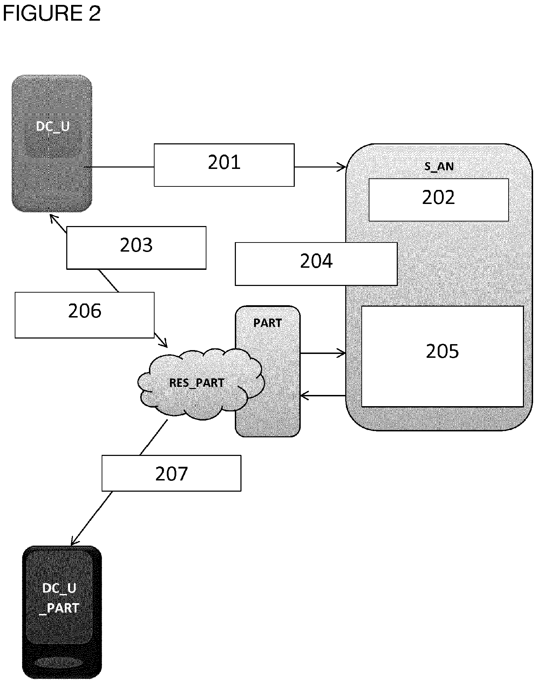

La figure 2 illustre les principales étapes de mise en oeuvre du procédé lors de l'étape A1 ; ces étapes sont référencées 201 à 207.

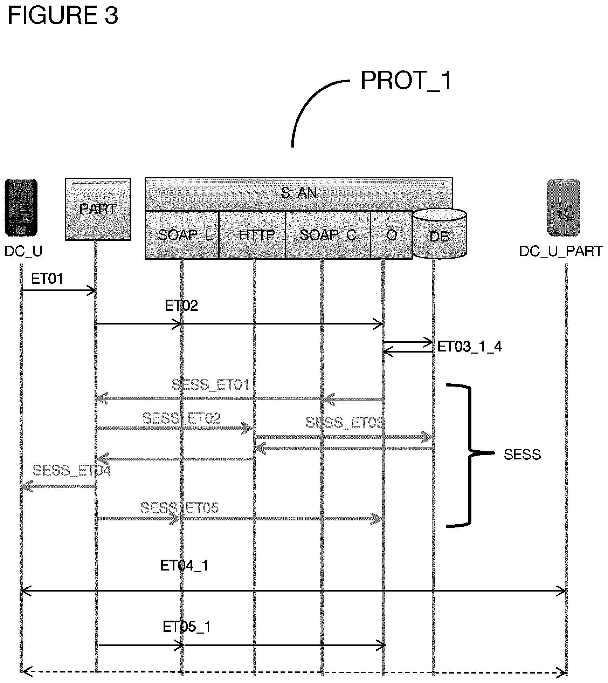

Le dispositif DC_U se connecte au dispositif DC_U_PART via la plateforme de communication de la société PART qui utilise des services du serveur S_AN. Les étapes suivantes s'effectuent parallèlement ou successivement : l'enchainement des échanges effectués sera détaillé en figure 3.

En 201 et 202, S_AN reçoit une notification d'initialisation de l'appel du client U vers la société PART et mémorise des données dans l'historique des appels. En 203, l'appel est acheminé à la plateforme de communication de la société PART via le réseau de la société RES_PART. Le serveur S_AN est notifié de l'appel entrant dans l'étape 204. En 205, le procédé mémorise dans l'historique des appels l'identifiant de connexion ID_DC_U et reçoit l'identifiant de connexion ID_U_PART de la plateforme de communication de la société PART. En 206, le client U est mis en attente, par exemple, à travers un message de bienvenue. En 207, l'appel est dirigé vers le salarié de la société PART, et la communication est établie entre les deux dispositifs DC_U_PART et DC_U. Alternativement, les appels entrants sont reçus directement par le serveur S_AN, et le module application AN détermine l'affectation de l'appel ; en particulier dans le cas d'utilisation d'un réseau MSISDN.

La figure 3 illustre par un diagramme des échanges effectués lors de l'étape A1 de mise en oeuvre du procédé.

Dans ce mode de réalisation illustré par le schéma PROT_1, le serveur S_AN mettant en oeuvre le procédé intègre une interface de communication de type SOAP (Simple Object Access Protocol) référencée SOAP_L, une application cliente HTTP, une application cliente SOAP_C, une application cliente O spécifique au module applicatif AN, et une base de données DB. Alternativement, les échanges peuvent par exemple s'exécuter selon une architecture de type REST (« Representational State Transfer » en anglais).

Lorsqu'un appel entrant arrive dans la société PART lors d'une étape ET01, l'interface de communication SOAP_L et l'application cliente O reçoivent la notification de cet appel entrant dans une étape ET02. Dans une étape ET03_1_4, l'application cliente O guide la mémorisation de l'identifiant de connexion de l'appel entrant dans la base de données DB. Alternativement, l'heure de l'appel et le numéro alias utilisé sont également mémorisés.

Dans une étape ET04_1, le client U est dirigé vers un salarié de la société PART.

Dans une étape ET05_1, le serveur S_AN reçoit les informations sur l'établissement de l'appel. Les dispositifs DC_U et DC_U_PART sont mis en relation.

Un ensemble d'étapes (référencées SESS_ET01 à SESS_ET05) d'une session référencée SESS, sont réalisées entre ET03_1_4 et ET04_1 et décrivent une série d'envois d'information et de requêtes entre la plateforme de communication interne PC et la plateforme de services alias PA, avec le serveur S_AN, permettant ainsi une mise à jour des informations entre la plateforme de communication de la société PART et le service S_AN. Dans la suite, la plateforme PC, la plateforme PA, ou l'ensemble regroupant les deux plateformes PC et PA, sont appelés indifféremment la plateforme de la société PART.

Plus précisément, une notification « push » est effectuée à travers SESS_ET01 de l'application cliente O vers la plateforme de la société PART et l'application client SOAP_C, une requête SESS_ET02 est lancée par la plateforme de la société vers le client HTTP pour obtenir le langage utilisé pour les requêtes pour la voix (VXML) et ensuite transférer un message vocal au dispositif DC_U par SESS_ET04. Une requête SESS_ET03 est lancée par le client HTTP vers la base de données DB pour mémoriser ou récupérer des informations, une notification push est effectuée à travers SESS_ET05 afin que le serveur S_AN soit notifié des informations mises à jour par la plateforme de la société PART. Dans la suite, les étapes ci-dessus sont référencées par SESS, et ne seront pas rappelées.

Les requêtes à la base de données DB sont effectuées en fonction du service et/ou du contexte. Ces requêtes peuvent être le nombre d'appels reçus sur une période de temps, le nombre d'appels effectués sur une période de temps, le temps moyen des appels reçus sur une période de temps, le temps moyen des appels effectués sur une période de temps, le nombre de contacts distincts pour les appels entrants sur une période de temps, le nombre de contextes valides sur une période de temps, le temps de contextes valides sur une période de temps, etc.

Dans une application industrielle d'un service mettant en oeuvre le procédé ici décrit, on appelle « contexte », l'association entre un numéro alias ID_PART et un numéro réel d'un salarié ID_DC_U_PART relatif au dispositif électronique DC_U_PART : dans un exemple d'implémentation, le procédé obtient l'historique des appels pour un numéro alias donné à travers la requête GET/contexts/{contextId}/calls.

Dans un mode de réalisation particulier, un identifiant de connexion peut être associé à une liste blanche (ou « whitelist » en anglais), par exemple seulement si c'est un numéro de téléphone valide, si le préfixe du pays est accepté par le service (« aliasing countries whitelist » en anglais), et si ce n'est pas un numéro alias. De même, un identifiant de connexion peut être associé à une liste de contacts préférés, par exemple associés également à un numéro d'alias donné.

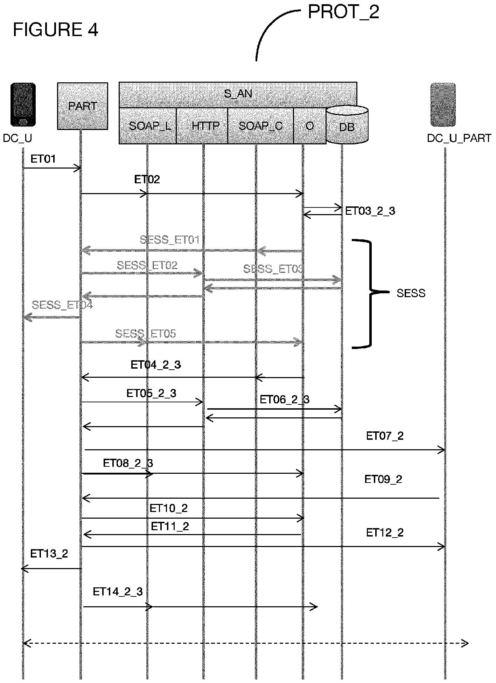

La figure 4 illustre par un diagramme les échanges effectués lors de l'étape B1 de mise en oeuvre du procédé en cas d'établissement d'une communication.

Dans un mode de réalisation illustré par le schéma PROT_2, le salarié va accepter de prendre l'appel du client U lors de l'étape B1.

Pour rappel, les étapes SESS_ET01 à SESS_ET05 de l'ensemble SESS sont identiques au schéma PROT_1 de la figure 3.

Dans une étape ET03_2_3, l'application client O récupère dans l'historique des communications, l'identifiant de connexion du destinataire de l'appel. L'application client O appelle la plateforme de communication de la société PART afin d'effectuer un protocole de confirmation à travers le client HTTP du serveur S_AN : une notification push ET04_2_3, une requête ET05_2_3 au client HTTP, puis une requête ET06_2_3 par le client HTTP.

Dans une étape ET07_2, le salarié appelé reçoit une notification de l'appel, et l'information relative à cette notification dans une étape ET08_2_3, entre autres par l'application cliente O du serveur S_AN.

Dans une étape ET09_2, le salarié accepte l'appel par exemple en appuyant sur la touche « * » du téléphone, et la plateforme de communication de la société envoie l'information relatif à cette acceptation dans une étape ET10_2 à l'application cliente O du serveur S_AN. Dans une étape ET11_2, l'application cliente O demande l'établissement d'une communication avec le salarié à la plateforme de la société ; ce qu'effectue cette dernière à travers l'envoi d'une notification push ET12_2 vers le dispositif DC_U_PART. Dans une étape ET13_2, le client est notifié de la mise en relation, et dans une étape ET14_2_3 le serveur S_AN reçoit les informations de cette notification. Les deux dispositifs de communication sont mis en relation.

Les étapes ci-dessus décrivent une série d'envois d'information et de requêtes entre la plateforme de communication de la société et le serveur mettant en oeuvre le procédé ici décrit, permettant une mise à jour des informations entre la plateforme de communication de la société PART et le serveur S_AN.

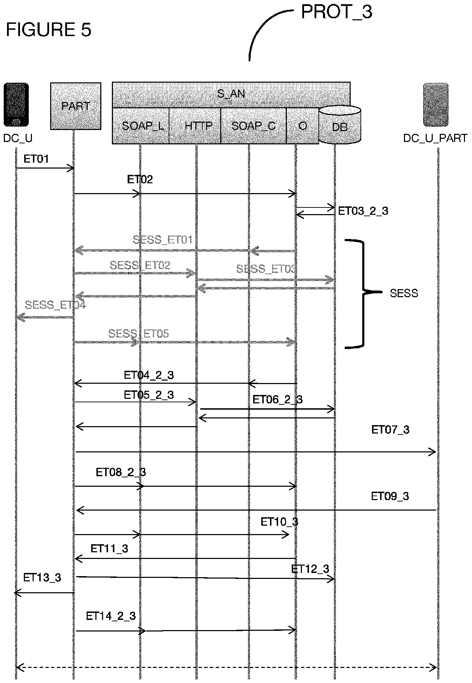

La figure 5 illustre par un diagramme les échanges effectués lors de l'étape B1 de mise en oeuvre du procédé en cas de non-établissement d'une communication.

Dans un mode de réalisation illustré par le schéma PROT_3, le salarié ne prend pas l'appel.

Pour rappel, les étapes SESS_ET01 à SESS_ET05 de la session SESS sont identiques au schéma PROT_1 de la figure 3.

Les étapes ET04_2_3 à ET08_2_3 sont identiques au schéma PROT_2 de la figure 4.

Dans une étape ET09_3 l'appelé n'appuie pas sur la touche « * » du téléphone, et la plateforme de communication de la société envoie cette information dans une étape ET10_3, en particulier à l'application cliente O du serveur S_AN. Dans une étape ET11_3, l'application client O demande l'établissement d'une communication avec un dispositif relatif à la messagerie vocale (non illustré) à la plateforme de la société PART ; cette dernière à travers l'envoi d'une notification push ET12_3 notifie le serveur S_AN, et effectue par une étape ET13_3 une notification au dispositif DC_U de la mise en relation avec le dispositif relatif à la messagerie vocale. Dans une étape ET14_2_3, le serveur S_AN réceptionne des informations de cette notification. Les deux dispositifs de communication sont mis en relation.

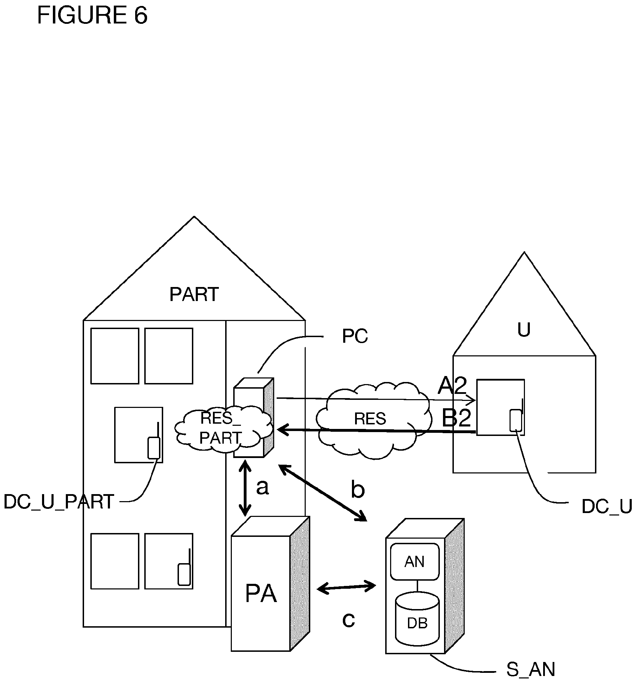

La figure 6 illustre un deuxième exemple de mise en oeuvre du procédé ici décrit.

Dans ce mode de réalisation, un salarié de la société PART appelle un client U à partir d'un téléphone fixe de la société, l'appel s'effectuant via la plateforme d'anonymisation PA (a). Les paramètres de l'appel sont sauvegardés dans la base de données DB intégrée dans le serveur de de traitement de données de communications S_AN ; en particulier l'identifiant ID_DC_U_PART de l'émetteur, l'identifiant ID_DC_U du destinataire, l'identifiant de connexion générique de la société utilisé, et l'heure de l'appel.

Dans un mode de réalisation particulier, une étape de mémorisation d'informations est ultérieurement effectuée une fois la communication établie ou non établie, afin de sauvegarder les informations sur l'établissement ou le non-établissement de l'appel (b).

Dans une première étape notée A2, le salarié appelle le client, le procédé mis en oeuvre dans le serveur S_AN mémorise les caractéristiques de ce premier appel. Dans une deuxième étape B2, le client rappelle quelques minutes plus tard, par exemple pour demander une précision supplémentaire, le procédé reçoit des caractéristiques de ce deuxième appel, recherche dans l'historique des communications DB, et retrouve l'identifiant de connexion du salarié ID_DC_U_PART. L'étape B2 est identique à l'étape B1 de la figure 1. Alternativement, le numéro alias est également mémorisé, puis recherché.

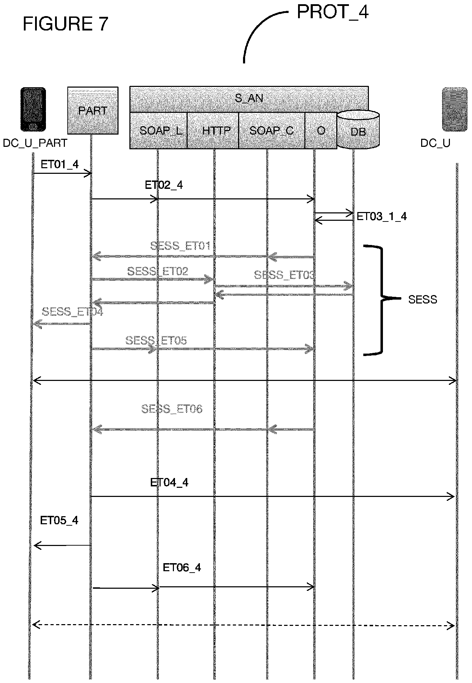

La figure 7 illustre par un diagramme les échanges effectués lors de l'étape A2 de mise en oeuvre du procédé.

Lors d'un appel sortant en une étape ET01_4, l'interface de communication SOAP_L et l'application cliente O reçoivent la notification de cet appel sortant dans une étape ET02_4. Dans une étape ET03_1_4, l'application cliente O dirige la mémorisation dans l'historique des communications des identifiants de connexion de l'appel sortant et du client. Alternativement l'heure de l'appel et le numéro alias utilisé sont également mémorisés.

Dans une étape ET04_4, la plateforme de la société PART se connecte au dispositif DC_U, et dans une étape ET_05_4 notifie le dispositif du salarié.

Dans une étape ET06_4, la plateforme de communication de la société envoie au serveur S_AN des informations sur cette notification. Les dispositifs DC_U_PART et DC_U sont mis en relation.

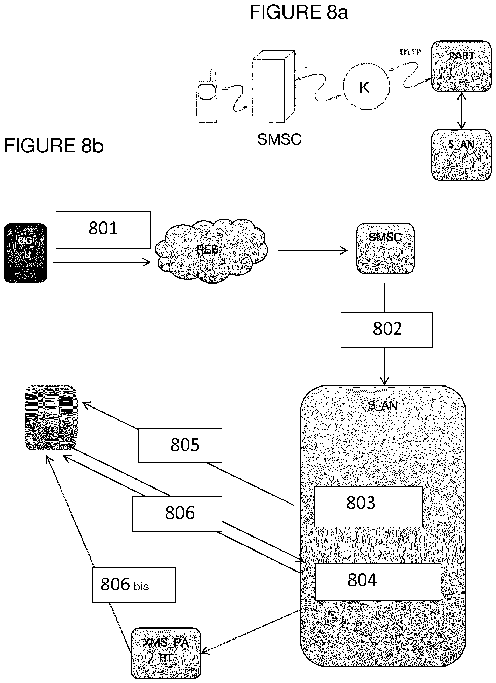

La figure 8a et la figure 8b illustrent un environnement de mise en oeuvre du procédé de traitement de données de communications ici présenté, par exemple dans le cas d'un message SMS envoyé par un client.

Dans le schéma général de mise en oeuvre de la figure 8a, à travers un système utilisant un logiciel référencé K, par exemple le logiciel Kannel, et à travers des requêtes HTTP vers le serveur S_AN, le procédé ici décrit permet l'affectation de communications de, et par, SMS.

Le serveur S_AN envoie des notifications push vers les applications mobile installées dans le dispositif DC_U_PART dans les cas suivants : réception d'un nouveau SMS (mémorisé dans la base de données en attendant d'être recherché), un appel manqué ou un nouveau message dans la boite de messagerie.

Dans un mode de réalisation décrit dans la figure 8b, en 801, le client envoie un SMS avec son dispositif DC_U, vers le numéro alias de la société. En 802, le SMS est dirigé à travers le réseau RES et la plateforme cliente SMSC vers une interface de communication de type SMS installée dans le serveur S_AN. En 803, cette interface SMS transfère le SMS vers le serveur S_AN en utilisant une requête HTTP. En 804, le salarié est retrouvé à travers une recherche dans l'historique des communications, et le SMS est stocké. En 805, une notification du SMS est envoyée vers DC_U_PART. En 806, le dispositif DC_U_PART accède au SMS en faisant appel à une API. En 806bis, si le SMS reste plus de N min dans la base de données (N est paramétrable), il est automatiquement envoyé à DC_U_PART via un service XMS_PART, un service XMS (« eXtended Messaging Service » en anglais) permettant l'échange de messages SMS.

Dans le présent texte, les dispositifs ou modules peuvent être mis en oeuvre sous forme logicielle (ou « software »), auquel cas il prend la forme d'un programme exécutable par un processeur, ou sous forme matérielle (ou « hardware »), comme un circuit intégré spécifique application (ASIC), un système sur puce (SOC), ou sous forme d'une combinaison d'éléments matériels et applications, comme par exemple un programme application destiné à être chargé et exécuté sur un composant de type FPGA (Field Programmable Gate Array). »

Bien que les modes de réalisation décrits ci-avant le soient dans le cadre non-limitatif de communications entre une société et ses clients, c'est-à-dire dans le contexte du B2C (de l'anglais « Business-to-Consumer »), l'homme de l'art comprendra que la présente invention n'est pas limitée à ce contexte, qui ne sert que de support pour illustrer sa mise en oeuvre selon un ou plusieurs modes de réalisation, et que la présente invention est également applicable et peut être mise en oeuvre selon différents modes de réalisation dans d'autres contextes, comme par exemple celui du B2B (de l'anglais « Business-to-Business »), ou dans un contexte privé, ou familial. Le procédé proposé présente ainsi l'avantage, dans le contexte d'un usage familial, dans lequel une famille composée de plusieurs membres utilise un numéro unique, par exemple un numéro fixe unique, d'éviter que les membres de la famille, en particulier les enfants, n'aient à divulguer leur numéro de téléphone personnel (typiquement leur numéro de téléphone mobile) à des personnes extérieures à la famille, tels que, par exemple, des artisans (plombiers, réparateurs, etc.) ou autres professionnels (livreurs, etc.) amenés à être en contact téléphonique avec la famille, une personne de la famille utilisant pour les appeler le numéro unique de la famille, tout en pouvant être joint directement en cas de rappel du correspondant. Le procédé proposé permet en effet, malgré que la personne extérieure à la famille n'ait eu connaissance du numéro unique de la famille et non pas du numéro personnel de la personne de la famille l'ayant appelé, que lors d'un rappel de l'intervenant extérieur vers le numéro unique de la famille, l'appel soit dirigé vers la personne de la famille qui a initié le premier appel vers l'intervenant extérieur. Par exemple, lorsqu'un membre d'un groupe correspondant à une famille appelle un numéro de téléphone ou un identifiant de téléphonie autre que ceux des éléments du groupe (dans cet exemple de la famille), l'appel sortant pourra être présenté à l'appelé avec un numéro unique utilisé comme alias par les membres du groupe. Le procédé proposé permet que, lors d'un rappel du correspondant vers le numéro unique, l'appel soit dirigé vers le membre du groupe ayant initié le premier appel sortant, et non pas vers un autre membre du groupe. L'homme de l'art comprendra en outre que la présente invention n'est pas limitée à ce contexte familial, qui pourra être généralisé pour la mise en oeuvre de la présente invention selon un ou plusieurs modes de réalisation à tout groupe d'utilisateurs ou de machines utilisant un numéro unique comme alias à présenter lors de l'appel d'une personne ou d'une machine ayant un numéro autre que les numéros d'appel des éléments du groupe, pour par exemple permettre qu'un rappel vers le numéro d'alias soit dirigé vers le numéro ou l'identifiant de la personne ou de la machine ayant initié le premier appel.

Bien que décrits à travers un certain nombre d'exemples de réalisation détaillés, le procédé proposé et l'objet pour la mise en oeuvre du procédé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci5 dessus peuvent être mis en oeuvre ensemble, ou séparément, ou bien substitués les uns aux autres, et l'ensemble des différentes combinaisons et sous combinaisons des aspects et caractéristiques font partie de la portée de l'invention telle que définie par les revendications ci-après. En outre, il se peut que certains dispositifs et objets décrits ci-dessus n'incorporent pas la totalité des modules et fonctions décrits pour les modes 10 de réalisation préférés.

## Revendications

1. Procédé de traitement de données de communications à travers un réseau de communication, comprenant :
- recevoir des premières données relatives à une première communication entre un premier et un second dispositifs électroniques respectivement associés à un premier et un second identifiants de connexion, les premières données comprenant ledit second identifiant de communication et un identifiant de connexion générique associé au premier identifiant de connexion et utilisé pour la première communication,
- mémoriser au moins le premier identifiant de connexion associé à l'identifiant de connexion générique, et le second identifiant de connexion utilisé pour la première communication,
- recevoir des secondes données relatives à une deuxième communication,
- rechercher parmi les secondes données, le premier ou le second identifiant de connexion mémorisé, et
- selon le résultat de la recherche, associer la deuxième communication aux premier et second identifiants de connexion.

2. Procédé de traitement de données de communications selon la revendication 1 comprenant en outre envoyer le premier identifiant de connexion selon le résultat de la recherche.

3. Procédé de traitement de données de communications selon la revendication 1, pour lequel la première communication est effectuée vers l'identifiant de connexion générique.

4. Procédé de traitement de données de communications selon la revendication 1, pour lequel une période de temps entre la première et la deuxième communication est également associée à la deuxième communication selon le résultat de la recherche.

5. Procédé de traitement de données de communications selon la revendication 1, comprenant en outre mémoriser l'identifiant de connexion générique, rechercher l'identifiant de connexion générique, et associer l'identifiant de connexion générique à la deuxième communication selon le résultat de la recherche.

6. Procédé de traitement de données de communications selon la revendication 1, comprenant en outre mémoriser un type de communication, rechercher le type de communication, et associer le type de communication à la deuxième communication selon le résultat de la recherche.

7. Procédé de traitement de données de communications selon la revendication 1, comprenant en outre mémoriser les secondes données relatives à la deuxième communication.

8. Procédé de traitement de données de communications selon la revendication 1, comprenant en outre, si une communication est un appel téléphonique établi, mémoriser des données relatives à l'établissement.

9. Procédé de traitement de données de communications selon la revendication 1, comprenant en outre, si une communication est un appel téléphonique non-établi, mémoriser des données relatives au non-établissement.

10. Procédé de traitement de données de communications selon la revendication 1, pour lequel la première communication est effectuée par un émetteur anonymisé.

11. Procédé de traitement de données de communications selon la revendication 1, pour lequel la deuxième communication est un message.

12. Programme informatique **caractérisé en ce qu'**il comporte des instructions pour la mise en oeuvre du procédé selon l'une des revendications 1 à 11, lorsque ce programme est exécuté par un processeur.

13. Support de données sur lequel a été mémorisée au moins une série d'instructions de code de programme pour l'exécution d'un procédé selon l'une des revendications 1 à 11.

14. Serveur de traitement de données de communications (S_AN), apte à traiter des données de communications à travers un réseau de communication, un procédé d'anonymisation d'identifiant de connexion de dispositifs électroniques étant mis en oeuvre à travers une plateforme d'anonymisation (PA), le serveur comprenant une base de données (DB) et un module applicatif (AN) comprenant :
- un module de communication apte à réceptionner et à envoyer des données relatives à des communications entre un premier et un second dispositifs électroniques respectivement associés à un premier et un second identifiants de connexion, lesdites données comprenant ledit second identifiant de communication et un identifiant de connexion générique étant associé au premier identifiant de connexion,
- un module de mémorisation apte à mémoriser dans une base de données (DB), appelée historique des communications, au moins le premier identifiant de connexion associé à l'identifiant de connexion générique d'une communication, et le second identifiant de connexion,
- un module de recherche apte à rechercher dans la base de données, le premier ou le second identifiant de connexion d'une communication mémorisé, et
- un module d'association apte à associer à une communication, le premier et le second identifiants de connexion.
